Europäisches Patentamt

(19) European Patent Office    (11) Publication number: **0 021 478**
Office européen des brevets                                **B1**

(12) **EUROPEAN PATENT SPECIFICATION**

(45) Date of publication of patent specification: **17.07.85**    (51) Int. Cl.⁴: **C 08 F 110/00, C 08 F 4/64**

(21) Application number: **80200502.5**

(22) Date of filing: **28.05.80**

(54) **A process for the stereospecific polymerization of an alpha-olefin and an alpha-olefin polymerization catalyst system.**

(30) Priority: **11.06.79 GB 7920181**

(43) Date of publication of application:
**07.01.81 Bulletin 81/01**

(45) Publication of the grant of the patent:
**17.07.85 Bulletin 85/29**

(84) Designated Contracting States:
**BE DE FR GB IT NL**

(56) References cited:
**DE-A-2 630 585**
**FR-A-2 018 465**

(73) Proprietor: **SHELL INTERNATIONALE
RESEARCH MAATSCHAPPIJ B.V.**
**Carel van Bylandtlaan 30**
**NL-2596 HR Den Haag (NL)**

(72) Inventor: **Goodall, Brian Leslie**
**Badhuisweg 3**
**NL-1031 CM Amsterdam (NL)**
Inventor: **van der Linden - Lemmers, Wilhelmina
Johanna Maria**
**Badhuisweg 3**
**NL-1031 CM Amsterdam (NL)**

(74) Representative: **Aalbers, Onno et al**
**P.O. Box 302**
**NL-2501 CH The Hague (NL)**

Courier Press, Leamington Spa, England.

# 0 021 478

**Description**

The present invention relates to a process for the stereospecific polymerization of an alpha-olefin with at least three carbon atoms with a catalyst system comprising a titanium halide and to the catalyst system per se.

It is well known that catalyst systems for the stereospecific polymerization of an alpha-olefin, which comprise a titanium halide component and an organo aluminium component can be modified in order to increase their polymerization activity and stereospecific performance, by reacting the organo aluminium compound with an electron donor (Lewis base). Numerous electron donors have already been proposed, such as ethyl benzoate, p-methoxy ethyl benzoate, triethyl amine, dimethyl terephthalate, methyl methacrylate, pyridine, piperidine and tetramethyl ethylene diamine. Other electron donors which have been disclosed in Netherlands patent application 7709699 are propyl-phenol, cresol and naphthol.

German Offenlegungsschrift 2,630,585 is concerned with organo aluminium components for alpha-olefin polymerization catalyst systems comprising a halogen-free organo aluminium compound with the general formula $R_2Al(OR')$ or $RAl(OR')_2$ in which R is an alkyl group and R' is a 2,6-di-sec. or tert.alkyl substituted phenyl group or a 2,8-di-sec. or tert.alkyl substituted naphthyl group. These catalyst components may be prepared by reacting a trialkyl aluminium compound with an appropriate sterically hindered phenol or naphthol. Those proposed catalyst components are only of interest for supported titanium tetrahalide catalyst systems comprising a particulate magnesium dihalide; with conventional titanium trihalide catalyst systems an insufficient stereospecific performance is obtained, as will be shown in the comparative Example included herein (Example 10).

FR—A—2,018,465 is concerned with thermostabilization of alpha-olefin polymers by building into the polymer chain a copolymerizable ligand of the organo aluminium catalyst component of a Ziegler-Natta catalyst system. This ligand is an alkenyl-2,6-di-tert.alkyl-phenoxy group. Subsequent to polymerization the aluminium-phenoxy ligands which have been incorporated into the polymer chain are hydrolysed into 2,6-di-tert.alkyl-phenolic hydroxyl groups, thus imparting in-situ thermostability.

In accordance with the present invention an attractive stereospecific performance and an attractive polymerization activity are obtained when employing catalyst systems comprising organo aluminium halide catalyst components that have been modified by reacting with a sterically hindered hydroxy aromatic compound.

The present invention comprises a process for the stereospecific polymerization of an alpha-olefin with at least three carbon atoms with a catalyst system comprising a) a titanium halide and b) a reaction product of a non-copolymerizable organo aluminium compound and a hydroxy aromatic compound having a sec. or tert.alkyl group in both ortho-positions with respect to the hydroxy group, characterized in that the organo aluminium compound used to prepare the reaction product is an alkyl aluminium halide or a mixture of an alkyl aluminium halide and a halogen free alkyl aluminium compound, and the reaction product has the general formula $R_pAl(OR')_qX_r$ in which R is an alkyl group, OR' represents the aryloxy group derived from the hydroxy aromatic compound, X represents a halogen atom, p is at least 1, q is at least 0.3 and r is at least 0.3, the sum of p, q and r being equal to 3.0.

Preferred hydroxy aromatic compounds are 2,6-di-tert.alkyl hydroxy benzenes, in which one or more of the ring carbon atoms may carry substituents other than hydrogen atoms. Good representatives of these groups of compounds are 2,6-di-tert.butyl-hydroxy benzene, 2,6-di-tert.butyl-4-methyl-hydroxy benzene, 2,6-di-tert.decyl-4-methoxy-hydroxy benzene, 2,6-di-tert.butyl-4-isopropyl hydroxy benzene, tri-(2,6-di-tert.hexyl-hydroxy-phenyl) benzene, 1,3,5-tri(2,6-di-tert.butyl-hydroxy-phenyl)-2,4,6-trimethyl benzene, 2,2-di-(2,6-di-tert.butyl-hydroxy-phenyl) propane, di-(2,6-di-tert.butyl-hydroxy-phenyl) methane and 2,6-di-tert.amyl-4-n-butyl-hydroxy benzene.

Other examples of suitable hydroxy aromatic compounds are 1,3-di-tert.butyl-2-hydroxy anthracene, 1,3-di-tert.hexyl-2-hydroxy phenanthrene, 1,3,6,8-tetra-tert.butyl-2,7-dihydroxy phenanthrene, 2,8-di-tert.butyl-hydroxy naphthalene, 1,3-di-tert.hexyl-2-hydroxy naphthalene, 2,6-dicyclohexyl-4-methyl-hydroxy benzene, 2,6-di-isopropyl-4-methoxy-hydroxy benzene and, 1,3-di-isoamyl-2-hydroxy naphthalene.

Suitable organo aluminium halides which can be used for the preparation of catalyst components b, are selected from alkyl aluminium mono and dihalides, particularly those in which the alkyl groups have from 2 to 8 carbon atoms. Good representatives of this class of compounds are diethyl aluminium chloride, di-isopropyl aluminium chloride, di-isobutyl aluminium bromide, di-n-hexyl aluminium iodide, dicyclo hexyl aluminium chloride, n-propyl aluminium dibromide, isopropyl aluminium di-iodide, iso-amyl aluminium dichloride and n-octyl aluminium dichloride. The most preferred compounds are alkyl aluminium dichlorides and dialkyl aluminium chlorides.

The halogen-free organo aluminium compounds that can be used for the preparation of catalyst component b are preferably selected from alkyl aluminium compounds wherein the alkyl groups has from 2 to 8 carbon atoms. Examples of this class of compounds are triethyl aluminium, tri-isobutyl aluminium, diethyl-propyl aluminium and di-isopropyl-hexyl aluminium.

In the preparation of component b) the three reactants may be combined in any order. Thus the invention includes first preparing a reaction product of the alkyl aluminium halide and the aromatic compound and then reacting this product with the halogen free alkyl aluminium compound, but also reacting the aromatic compound with a mixture of alkyl aluminium halide and halogen-free alkyl aluminium compound, as well as first reacting the aromatic compound with the halogen-free alkyl aluminium compound and then reacting the resulting product with the alkyl aluminium halide. Any and all of these reactions and also, the reaction to prepare catalyst component b) may be effected in the presence of catalyst component a). It is however preferred to prepare the final catalyst system by combining component a) with components b) which have been prepared in a separate, previous operation.

In the modified catalyst components of this invention corresponding with the general formula $R_pAl(OR')_qX_r$, p is preferably at most 2.0, q is preferably at least 0.9 and r is preferably at least 0.9. No critical temperature exists for the desired reaction between the hydroxy aromatic compound and the aluminium alkyl compound or compounds, hence, the reaction may be effected at room temperature or at an elevated temperature of, for example, 95°C, and in the presence or absence of an inert organic diluent.

In the process of this invention two different types of titanium halides are preferably employed as catalyst components a), viz. titanium trihalides or titanium tetrahalides, provided the latter are combined with a magnesium dihalide. The dihalides may be bromides or iodides, but particular preference is given to chlorides. Components a) may also be modified by reacting with an electron donor.

When titanium trihalide components are used, the atomic ratio of aluminium to titanium employed for combining the catalyst components is usually varied in the range of from 0.1 to 12:1, preferably from 1.0 to 9:1. For titanium tetrahalide components, the atomic ratio of aluminium to titanium is usually in between 1 to 500:1, preferably from 10:1 to 200:1.

The novel catalyst system of this invention may be employed for homo- and copolymerization of alpha-olefins, such as 1-pentene, 1-butene, 1-octene, preferably propylene. In copolymerization the second monomer is not limited to olefins with three carbon atoms, thus copolymerization of propylene with ethylene is included as well in the process of this invention.

The polymerization can be effected in accordance with any of the conventional methods, such as slurry polymerization in liquid monomer or in an inert hydrocarbon diluent, and gas phase polymerization. Hydrogen may be used to control molecular weight. Continuous or batch-wise polymerization is possible. The polymerization pressure will usually be varied in between 98 and 5000 kPa and the temperature will usually be chosen in between 0°C and 110°C, preferably in between 20 and 85°C.

Example 1

a) Preparation of titanium trichloride

A solution comprising 3 mol TiCl$_4$ and 1.5 mol di-isoamylether in 0.75 l toluene was gradually added dropwise during one hour at 20°C to a stirred solution comprising 1 mol triethyl aluminium, 1 mol di-isoamylether and 2 l toluene. When the addition was completed the temperature of the resulting reaction mixture was raised to 90°C during 150 minutes and kept at that temperature for two hours. The active particulate TiCl$_3$ so obtained was isolated from the liquid reaction medium by decantation and washed six times with toluene and one time with iso-octane.

b) Preparation of activating component

4 mmol of triethyl aluminium and 4 mmol of 2,6-di-tert.butyl-hydroxy benzene were mixed at a temperature of 60°C in the presence of 8 ml iso-octane. The resulting mixture was then introduced at room temperature into a 3 l glass polymerization reactor containing 1400 ml iso-octane and 4 mmol of ethyl aluminium dichloride. The resulting reaction mixture is referred to herein as Activator A.

c) Polymerization

15 minutes after the addition of the reaction mixture into the polymerization reactor, 1.5 mmol of active TiCl$_3$ suspended in 100 ml iso-octane were introduced into the reactor. Then, the reactor was pressurized with propylene and the contents were rapidly heated to 70°C. At that temperature the pressure was 260 kPa and the polymerization was continued for three hours. The reaction was stopped by deactivating the catalyst with butanol and the polymer was washed with a mixture of aqueous HCl and ethyl alcohol and three times with water. After steam distillation the polymer was filtered off and dried.

The polymerization activity of the catalyst system is calculated as gr. polymer per gram TiCl$_3$ per 98 kPa per hour. The stereospecific performance of the catalyst system is expressed as the percentage of polymeric material that remains soluble when cooling a solution of polymer in xylene from its boiling point to room temperature.

Example 2

Example 1 is repeated now using 2,6-di-tert.butyl-4-methyl-hydroxy benzene instead of 2,6-di-tert.butyl-hydroxy benzene, but leaving all other conditions unchanged (Activator B).

Example 3

8 mmol of diethyl aluminium chloride were reacted with 4 mmol of 2,6-di-tert.butyl-hydroxy benzene at 60°C for one hour in the presence of 10 ml iso-octane. The resulting reaction mixture (Activator C) was introduced into a reactor containing 1400 ml iso-octane. Thereafter the procedure of Example 1c) was followed.

Example 4

8 mmol of diethyl aluminium chloride were reacted with 4 mmol of 2,6-di-tert.butyl-hydroxy benzene at 60°C for one hour in the presence of 10 ml iso-octane. The resulting reaction mixture (Activator D) was introduced into a reactor containing 1400 ml iso-octane and 1 mmol triethyl aluminium. Thereafter the procedure of Example 1c) was followed.

Example 5

8 mmol of diethyl aluminium chloride were reacted with 4 mmol of 2,6-ditert.butyl-4-methyl-hydroxy benzene at 60°C in the presence of 10 ml iso-octane. The resulting reaction mixture (Activator E) was introduced into a reactor containing 1400 ml of iso-octane. Thereafter the procedure of Example 1c) was followed.

Example 6

4 mmol of tri-isobutyl aluminium and 4 mmol of 2,6-di-tert.butyl-4-methyl-hydroxy benzene were mixed at 60°C in the presence of 10 ml iso-octane. The resulting reaction mixture (Activator F) was then introduced into a reactor containing 1400 ml iso-octane and 4 mmol ethylaluminium dichloride and the polymerization procedure of Example 1c) was followed.

Example 7

A mixture of 4 mmol triethyl aluminium and 4 mmol ethyl aluminium dichloride was introduced into a polymerization reactor containing 1400 ml iso-octane. Then at 60°C, 4 mmol of 2,6-di-tert.butyl-4-methyl-hydroxy benzene were introduced into the reactor (Activator G). Thereafter the procedure described in Example 1c) was followed.

Example 8 (for comparison)

A mixture of 8 mmol ethyl aluminium dichloride (Activator a) and 8 ml iso-octane was introduced into a reactor comprising 1400 ml iso-octane. Thereafter the procedure of Example 1c) was followed.

Example 9 (for comparison)

Example 8 was repeated at the same conditions apart from employing 9 mmol of diethyl aluminium chloride (Activator b) instead of 8 mmol ethyl aluminium dichloride.

Example 10 (for comparison)

In order to compare the modified activators of this invention with those known from German Offenlegungsschrift 2,630,585, Example 1 was repeated omitting the presence of ethyl aluminium dichloride in the reactor when introducing the reaction product of the hindered phenol and triethyl aluminium (Activator c). Then the procedure of Example 1c) was followed.

All polymerization results are included in the Table below.

TABLE

| Ex. | Activator | Reactants | | Results | |
|---|---|---|---|---|---|
| | | Phenolic | Organo-Al | Activity | Solubles |
| 1 | A | DTBP | $AlEt_3$, EADC | 198 | 2.4 |
| 2 | B | IONOL | $AlEt_3$, EADC | 178 | 2.3 |
| 3 | C | DTBP | DEAC | 144 | 1.8 |
| 4 | D | DTBP | DEAC, $AlEt_3$ | 191 | 3.3 |
| 5 | E | IONOL | DEAC | 163 | 2.4 |
| 6 | F | DTBP | $AliBu_3$, EADC | 206 | 1.3 |
| 7 | G | IONOL | $AlEt_3$, EADC | 191 | 2.8 |
| 8* | a | — | EADC | 0.1 | — |
| 9* | b | — | DEAC | 141 | 8.0 |
| 10* | c | DTBP | $AlEt_3$ | 190 | 30 |

*for comparison
$AliBu_3$=tri-isobutyl aluminium
$AlEt_3$=triethyl aluminium
DEAC=diethyl aluminium chloride
EADC=ethyl aluminium dichloride
DTBP=2,6-di-tert.butyl-hydroxy benzene
IONOL=2,6-di-tert.butyl-4-methyl-hydroxy benzene

**Claims**

1. A process for the stereospecific polymerization of an alpha-olefin with at least three carbon atoms with a catalyst system comprising a) a titanium halide and b) a reaction product of a non-copolymerizable organo aluminium compound and a hydroxy aromatic compound having a sec. or tert. alkyl group in both ortho-positions with respect to the hydroxy group, characterized in that the organo aluminium compound used to prepare the reaction product is an alkyl aluminium halide or a mixture of an alkyl aluminium halide and a halogen free alkyl aluminium compound, and the reaction product has the general formula $R_pAl(OR')_qX_r$ in which R is an alkyl group, OR' represents the aryloxy group derived from the hydroxy aromatic compound, X represents a halogen atom, p is at least 1, q is at least 0.3 and r is at least 0.3, the sum of p, q and r being equal to 3.0.

2. A process as claimed in claim 1, in which the alkyl aluminium halide is a dialkyl aluminium chloride or an alkyl aluminium dichloride.

3. A process as claimed in claim 1 or 2, in which the halogen-free alkyl aluminium compound is an alkyl aluminium compound in which the alkyl groups have from 2 to 8 carbon atoms.

4. A process as claimed in any one of claims 1—3, in which the aromatic compound is a 2,6-di-tert.alkyl hydroxy benzene.

5. A process as claimed in any one of claims 1 to 4, wherein the catalyst component a) comprises a titanium tetrahalide and a magnesium dihalide.

6. A process as claimed in any one of claims 1 to 4, wherein the catalyst component a) is a titanium trihalide.

7. A process as claimed in any one of claims 1 to 6, wherein the alpha-olefin is propylene.

8. A polymer produced by a process as claimed in any one of claims 1 to 7.

9. An olefin polymerization catalyst system comprising a) a titanium halide and b) a non-copolymerizable reaction product of an alkyl aluminium halide and an aromatic compound or a reaction product of an alkyl aluminium halide, an aromatic compound and a halogen-free alkyl aluminium compound, the aromatic compound being a hydroxy aromatic compound which contains a sec. or tert.alkyl group in both ortho-positions in respect of the hydroxyl group, said reaction product having the general formula $R_pAl(OR')_qX_r$ in which R is an alkyl group, OR' represents the aryloxy group derived from a hydroxy aromatic compound comprising a sec. or tert. alkyl group in both ortho positions in respect of the hydroxyl

5

group, X represents a halogen atom and in which p is at least 1, q is at least 0.3, r is at least 0.3, the sum of p, q and r being equal to 3.0.

## Patentansprüche

1. Verfahren zur stereospezifischen Polymerisation eines α-Olefins mit zumindest 3 Kohlenstoffatomen mit Hilfe eines Katalysatorsystems umfassend a) ein Titanhalogenid und b) ein Reaktionsprodukt aus einer nicht copolymerisierbaren Organoaluminiumverbindung und einer aromatischen Hydroxyverbindung mit einer sekundären oder tertiären Alkylgruppe in beiden Ortho-Stellungen in Beziehung auf die Hydroxygruppe, dadurch gekennzeichnet, daß die zur Herstellung des Reaktionsproduktes angewandte Organoaluminiumverbindung ein Alkylaluminiumhalogenid oder ein Gemisch aus einem Alkylaluminiumhalogenid und einer halogenfreien Alkylalkuminiumverbindung ist und das Reaktionsprodukt die allgemeine Formel $R_pAl(OR')_qX_r$ besitzt, in der R eine Alkylgruppe ist, OR' die Aryloxygruppe bedeutet, die abgeleitet ist von der aromatischen Hydroxyverbindung, X ein Halogenatom bedeutet, p zumindest 1, q zumindest 0,3 und r zumindest 0,3 ist, wobei die Summe von p, q und r=3,0 ist.

2. Verfahren nach Anspruch 1, wobei das Alkylaluminiumhalogenid ein Dialkylaluminium-chlorid oder ein Alkylaluminium-dichlorid ist.

3. Verfahren nach Anspruch 1 oder 2, wobei die halogenfreie Alkylaluminiumverbindung eine Alkylaluminiumverbindung ist, bei der die Alkylgruppen 2 bis 8 Kohlenstoffatome haben.

4. Verfahren nach einem der Ansprüche 1 bis 3, wobei die aromatische Verbindung 2,6-Di-tert.-alkylhydroxy-benzol ist.

5. Verfahren nach einem der Ansprüche 1 bis 4, wobei die Katalysatorkomponente a) ein Titantetrahalogenid und ein Magnesiumdihalogenid umfaßt.

6. Verfahren nach einem der Ansprüche 1 bis 4, wobei die Katalysatorkomponente a) ein Titantrihalogenid ist.

7. Verfahren nach einem der Ansprüche 1 bis 6, wobei das α-Olefin Propylen ist.

8. Polymer, das nach einem der Ansprüche 1 bis 7 hergestellt worden ist.

9. Katalysatorsystem zur Olefinpolymerisation, umfassend a) ein Titanhalogenid und b) ein nicht copolymerisierbares Reaktionsprodukt aus einem Alkylaluminiumhalogenid und einer aromatischen Verbindung oder ein Reaktionsprodukt aus einem Alkylaluminiumhalogenid, einer aromatischen Verbindung und einer halogenfreien Alkylaluminiumverbindung, wobei die aromatische Verbindung eine aromatische Hydroxyverbindung ist, die eine sekundäre oder tertiäre Alkylgruppe in beiden Ortho-Stellungen, bezogen auf die Hydroxylgruppe, enthält und das Reaktionsprodukt die allgemeine Formel $R_pAl(OR')_qX_r$ besitzt, in der R eine Alkylgruppe ist, OR' die Aryloxygruppe bedeutet, die abgeleitet ist von einer aromatischen Hydroxyverbindung, enthaltend eine sekundäre oder tertiäre Alkylgruppe in beiden Ortho-Stellungen, bezogen auf die Hydroxylgruppe, X ein Halogenatom bedeutet und wobei p zumindest 1, q zumindest 0,3, r zumindest 0,3 und die Summe aus p, q und r=3,0 ist.

## Revendications

1. Procédé de polymérisation stéréospécifique d'une alpha-oléfine ayant au moins 3 atomes de carbone avec un système catalyseur comprenant a) un halogénure de titane et b) un produit de réaction d'un composé d'organo-aluminium non-copolymérisable et d'un composé hydroxy aromatique ayant un groupe sec.- ou tert.-alcoyle dans les deux positions ortho par rapport au groupe hydroxy, caractérisé en ce que le composé d'organo-aluminium utilisé pour préparer le produit réactionnel est un halogénure d'alcoylaluminium ou un mélange d'un halogénure d'alcoyl-aluminium et d'un composé d'alcoyl-aluminium dépourvu d'halogène, et en ce que le produit de la réaction est de formule générale $R_pAl(OR')_qX_r$ ou R est un groupe alcoyle, OR' représente le groupe aryloxy dérivé du composé hydroxy aromatique, X représente un atome d'halogène, p vaut au moins 1, q vaut au moins 0,3 et r vaut au moins 0,3, la somme de p, q et r étant égale à 3,0.

2. Procédé selon la revendication 1, où l'halogénure d'alcoyl-aluminium est un chlorure de dialcoyl-aluminium ou un dichlorure d'alcoyl-aluminium.

3. Procédé selon les revendications 1 et 2, où le composé d'alcoyl-aluminium dépourvu d'halogène est un composé d'alcoyl-aluminium où les groupes alcoyle ont de 2 à 8 atomes de carbone.

4. Procédé selon l'une quelconque des revendications 1—3, où le composé aromatique est un 2,6-di-tert.alcoyl-hydroxy-benzène.

5. Procédé selon l'une quelconque des revendications 1 à 4, où le composant catalyseur a) comprend un tétrahalogénure de titane et un dihalogénure de magnésium.

6. Procédé selon l'une quelconque des revendications 1 à 4, où le composant catalyseur a) est un trihalogénure de titane.

7. Procédé selon l'une quelconque des revendications 1 à 6, où l'alpha-oléfine est le propylène.

8. Polymère produit par un procédé selon l'une quelconque des revendications 1 à 7.

9. Système catalyseur de polymérisation d'oléfine comprenant a) un halogénure de titane et b) un produit de réaction non copolymérisable d'un halogénure d'alcoyl-aluminium et d'un composé aromatique ou un produit de réaction d'un halogénure d'alcoyl-aluminium, d'un composé aromatique et d'un composé

**0 021 478**

d'alcoyl-aluminium dépourvu d'halogène, le composé aromatique étant un composé hydroxy aromatique qui contient un groupe sec.- ou tert.alcoyle dans les deux positions ortho par rapport au groupe hydroxyle, ledit produit réactionnel ayant la formule générale $R_pAl(OR')_qX_r$ où R est un groupe alcoyle, OR' représente le groupe aryloxy dérivé d'un composé hydroxy aromatique comprenant un groupe sec.- ou tert.alcoyle dans les deux positions ortho par rapport au groupe hydroxyle, X représente un atome d'halogène et où p vaut au moins 1, q vaut au moins 0,3, r vaut au moins 0,3, la somme de p, q et r étant égale à 3,0.